**Europäisches Patentamt**

**European Patent Office**

**Office européen des brevets**

(19)

(11) Veröffentlichungsnummer : **0 032 380**
**B1**

(12) **EUROPÄISCHE PATENTSCHRIFT**

(45) Veröffentlichungstag der Patentschrift :
09.07.86

(21) Anmeldenummer : 81100067.8

(22) Anmeldetag : 08.01.81

(51) Int. Cl.⁴ : **C 08 G 18/40, C 08 G 18/42,
C 08 G 18/48, C 08 G 18/50,
C 08 G 18/56, C 08 G 18/60,
C 08 G 18/64, C 08 G 18/66**

(54) Verfahren zur Herstellung von urethan- und/oder isocyanuratgruppenhaltigen Schaumstoffen.

(30) Priorität : 17.01.80 DE 3001462

(43) Veröffentlichungstag der Anmeldung :
22.07.81 Patentblatt 81/29

(45) Bekanntmachung des Hinweises auf die Patenterteilung : 09.07.86 Patentblatt 86/28

(84) Benannte Vertragsstaaten :
AT BE CH DE FR GB IT LI NL

(56) Entgegenhaltungen :
EP-A- 0 011 702
AT-B-   339 615
DE-A- 2 507 161
DE-A- 2 635 400
US-A- 2 880 192
US-A- 4 014 846
Die Akte enthält technische Angaben, die nach dem
Eingang der Anmeldung eingereicht wurden und die
nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Horn, Peter, Dr.
Im Bruennel 20
D-6945 Hirschberg (DE)
Erfinder : Hesse, Anton, Dr.
Peter-Nickel-Strasse 15
D-6946 Luetzelsachsen (DE)
Erfinder : Weyland, Peter, Dr.
Ludwigshafener Strasse 12A
D-6710 Frankenthal (DE)
Erfinder : Straehle, Wolfgang, Dr.
Hirschgasse 20
D-6900 Heidelberg (DE)
Erfinder : Marx, Matthias, Dr.
Seebacher Strasse 49
D-6702 Bad Duerkheim (DE)

EP 0 032 380 B1

## Beschreibung

Die Erfindung betrifft ein Verfahren zur Herstellung von urethan- und/oder isocyanuratgruppenhaltigen Schaumstoffen durch Umsetzung von organischen Polyisocyanaten mit Verbindungen mit reaktiven Wasserstoffatomen, die in Form von lagerstabilen Kristallitsuspensionen, welche als

a) kohärente Phase weiche Polyole mit einer Funktionalität von 2-8 und Hydroxylzahlen von 150 bis 700 und als

b) disperse Phase harte, kristalline organische Komponenten mit mindestens einem Zerewitinoff-aktiven Wasserstoffatom, Schmelzpunkten von 30 bis 260 °C und Molekulargewichten von 178 bis ungefähr 100 000 enthalten, verwendet werden, in Gegenwart von Treibmitteln, Katalysatoren und gegebenenfalls Hilfs- und Zusatzstoffen.

Es ist bekannt, Polyurethan-Kunststoffe mit verschiedenartigen physikalischen Eigenschaften dadurch herzustellen, daß man Verbindungen mit mehreren aktiven Wasserstoffatomen, insbesondere Polyole, mit Polyisocyanaten, gegebenenfalls unter Mitverwendung von Polymeren als Verstärkungsmitteln, Kettenverlängerungsmitteln, Vernetzungsmitteln, Treibmitteln, Aktivatoren, Emulgatoren und anderen Zusatzstoffen umsetzt. Bei geeigneter Wahl der Komponenten lassen sich auf diese Weise sowohl elastische als auch starre Schaumstoffe, Lackierungen, Imprägnierungen, Beschichtungen oder Elastomere herstellen.

Die Herstellung von gegebenenfalls urethangruppenhaltigen Polyisocyanuraten ist ebenfalls nicht neu. Hierbei werden üblicherweise Polyisocyanate in Gegenwart von Hilfsmitteln und Katalysatoren cyclisiert und polymerisiert und die erhaltenen isocyanatgruppenhaltigen Isocyanurate und Polymerisate mit Polyolen umgesetzt. Gegebenenfalls ist es auch zweckmäßig, die Tri- bzw. Polymerisation und Polyadditionsreaktion mit Polyolen gleichzeitig durchzuführen.

Polyurethan- und Polyisocyanurat-Hartschaumstoffe zeichnen sich durch eine hohe Festigkeit, gute Wärmestabilität sowie ein optimales Dämmvermögen aus und sind somit als Dämmstoffe für die Kühlschrankindustrie, Bauindustrie u. a. hervorragend geeignet. Isocyanuratbindungen sind thermisch stabiler als Urethanbindungen und ergeben Polymere mit erhöhter Entzündungstemperatur ; nachteilig ist jedoch, daß die Polyisocyanurat-Hartschaumstoffe eine höhere Sprödigkeit und geringere Abriebfestigkeit besitzen.

Niederviskose, stabile Polymer-Polyol-Dispersionen sind beispielsweise aus der US-A-4 014 846 bekannt. Die disperse Phase in diesen Dispersionen besteht aus Pfropfpolymeren, die hergestellt werden aus einem größeren Anteil an ethylenisch ungesättigten Monomeren und einem geringen Anteil an hydroxygruppenhaltigen Verbindungen mit einer polymerisierbaren Kohlenstoffdoppelbindung durch radikalische Copolymerisation in einem Lösungsmittel. Die feinteiligen Polymerpartikel sind amorph, so daß eine erhöhte Wärmekapazität des Systems durch Aufschmelzen der dispersen Phase während der Schaumstoffherstellung nicht gegeben ist. Vielmehr werden die festen Polymerpartikel ähnlich einem anorganischen Füllstoff in fester Form in den Polyurethan-Weichschaumstoff eingebunden.

Ein Verfahren zur Herstellung von vernetzten, elastischen offenzelligen Polyurethan-Weichschaumstoffen, deren Härte durch eine Erhöhung des Vernetzungsgrades variiert wird, wird in der DE-A-2 507 161 beschrieben. Als Vernetzungsmittel verwendet werden hierzu in geringen Mengen kristalline, drei- oder mehrwertige Polyhydroxylverbindungen, die in einem Temperaturbereich von 60 bis 160 °C schmelzen und gegebenenfalls auch partiell mit Dicarbonsäuren verestert sein können.

Die Vernetzungsmittel unterscheiden sich somit hinsichtlich ihrer Struktur von den erfindungsgemäß verwendbaren harten, kristallinen Komponenten der dispersen Phase. Da Polyurethan-Hartschaumstoffe bereits stark vernetzt sind, ist ein zusätzlicher Einsatz von Vernetzungsmitteln nicht erforderlich.

Aus der US-A-2 880 192 sind gummiartige Kunststoffe bekannt, die unter Verwendung von difunktionellen Polyestern mit Molekulargewichten größer als 1 000 erhalten werden. Aus derartigen flüssigen Polyestern können aufgrund der hohen Viskosität keine bei Raumtemperatur lagerstabilen Kristallitsuspensionen hergestellt werden.

Aufgabe der vorliegenden Erfindung war es, urethan- und/oder isocyanuratgruppenhaltige Schaumstoffe zu entwickeln, die im Vergleich zu Polyurethan-Hartschaumstoffen eine erhöhte Flammbeständigkeit aufweisen und im Vergleich zu Polyisocyanuratschaumstoffen eine geringere Sprödigkeit und verbesserte Abriebfestigkeit sowie eine sehr gute Druckfestigkeit in und senkrecht zur Schäumrichtung besitzen bei bekanntermaßen guter Flammbeständigkeit.

Diese Aufgabe konnte überraschenderweise gelöst werden durch die Verwendung einer lagerstabilen Kristallitsuspension als Verbindung mit reaktiven Wasserstoffatomen.

Gegenstand der vorliegenden Erfindung ist somit ein Verfahren zur Herstellung von urethan- und/oder isocyanuratgruppenhaltigen Hartschaumstoffen durch Umsetzung von organischen Polyisocyanaten mit Verbindungen mit reaktiven Wasserstoffatomen in Gegenwart von Treibmitteln, Katalysatoren und gegebenenfalls Hilfs- und Zusatzstoffen, das dadurch gekennzeichnet ist, daß man als Verbindungen mit reaktiven Wasserstoffatomen lagerstabile Kristallitsuspensionen verwendet, die enthalten als

a) kohärente Phase Polyole mit einer Funktionalität von 2 bis 8 und Hydroxylzahlen von 150 bis 800 und als

b) disperse Phase, kristalline, organische Komponenten mit mindestens einem Zerewitinoff-aktiven Wasserstoffatom aus der Gruppe der

b1) mono- bis tetrafunktionellen Polyesterole mit Hydroxylzahlen von 10 bis 500 und Schmelzpunkten von 30 bis 240 °C, hergestellt aus aliphatischen und/oder aromatischen Dicarbonsäuren, deren Anhydriden oder Diester oder Mischungen aus den genannten Dicarbonsäuren oder -derivaten und mono- und polyfunktionellen Carbonsäuren in einer Menge bis zu 10 Mol.-%, bezogen auf die verwendeten aromatischen und/oder aliphatischen Dicarbonsäuren oder -derivate und zweiwertigen symmetrischen Alkoholen oder Mischungen aus zweiwertigen symmetrischen Alkoholen und unsymmetrisch aufgebauten Diolen in einer Menge bis zu 15 Mol.-% oder Monoalkoholen in einer Menge bis zu 20 Mol.-%, wobei die Mol.-% bezogen sind auf die symmetrischen zweiwertigen Alkohole,

b2) Oligoamide mit Molekulargewichten von 142 bis 5 000 und Schmelzpunkten von 30 bis 260 °C, hergestellt durch Polykondensation von aliphatischen oder aromatischen Dicarbonsäuren oder den entsprechenden Dicarbonsäureestern und aliphatischen primären und/oder sekundären Diaminen sowie Alkanolaminen im Molverhältnis 1 : 1,05 bis 2,

b3) Oligo- oder Polyesteramine mit Molekulargewichten von 400 bis 5 000 und Schmelzpunkten von 30 bis 190 °C, hergestellt durch Polykondensation von aliphatischen, cycloaliphatischen und/oder aromatischen Diolen mit aromatischen Aminocarbonsäuren oder -estern oder Mischungen aus Aminocarbonsäuren und aromatischen Dicarbonsäuren oder deren Dialkylester mit monofunktionellen $C_1$- bis $C_4$-Alkoholen, die teilweise durch aliphatische Dicarbonsäure ersetzt sein können, so daß die erhaltenen Oligo- oder Polyesteramine, bezogen auf die Gesamtmenge an Carbonsäuren, 20 bis 80 Mol.-% aromatische Aminocarbonsäuren einkondensiert enthalten, in solchen molaren Mengen, daß das Verhältnis von Carboxyl- oder Estergruppen der Carbonsäuren zu Hydroxylgruppen der Diole 1 : 0,5 bis 1,9 beträgt, oder durch Polykondensation von β-Hydroxyalkyl-arylaminen oder von Mischungen aus β-Hydroxyalkyl-arylaminen und den obengenannten Diolen mit Dicarbonsäuren oder deren Ester,

b4) Oligo- oder Polyurethane mit Molekulargewichten von 280 bis 5 000 und Schmelzpunkten von 30 bis 260 °C, hergestellt durch Polyaddition aus organischen Diisocyanaten und aliphatischen Diolen im Molverhältnis von 1 : 1,05 bis 2

b5) amino- oder hydroxylgruppenhaltigen Polyäther mit Molekulargewichten von 600 bis 20 000 und Schmelzpunkten von 30 bis 180 °C, hergestellt aus Alkylenoxid, Cyclohexenoxid, Styroloxid oder Tetrahydrofuran,

b6) Polyacetale oder Polyacetalcopolymere mit Molekulargewichten von 600 bis 100 000 und Schmelzpunkten von 40 bis 180 °C

oder beliebige Gemische der genannten harten, kristallinen Komponenten, der Anteil an disperser Phase (b) in der schaumfähigen Reaktionsmischung 0,5 bis 50 Gew.-%, bezogen auf das Gewicht der kohärenten Phase (a), beträgt und die organischen Polyisocyanate und Kristallitsuspensionen oder Mischungen aus Kristallitsuspensionen und zusätzlichen Polyester- und/oder Polyether-polyolen in solchen Mengen umsetzt, daß die Verhältnisse von reaktiven Wasserstoffatomen zu NCO-Gruppen 1: 0,8 bis 2,5 bei urethangruppenhaltigen Schaumstoffe und 1 : 2 bis 60 bei gegebenenfalls urethangruppenhaltigen Polyisocyanuratschaumstoffen sind.

Das erfindungsgemäße Verfahren weist den Vorteil auf, daß durch Variation der Zusammensetzung der Kristallitsuspension, z. B. durch Veränderungen der kohärenten (weichen) Phase einerseits und der dispersen kristallinen (harten) Phase andererseits Schaumstoffe nach Maß hergestellt werden können. Die harte, kristalline organische Komponente kann gezielt steuerbar durch ihren Schmelzpunkt bzw. den Übergang von der dispersen in die kohärente Phase in das Schaumgerüst eingebaut werden. Vorteilhaft ist insbesondere, daß die harte, kristalline organische Komponente erst zu einem Zeitpunkt eingebaut wird, zu dem das Schaumgerüst bereits teilweise ausgebildet ist, so daß eine gezielte Stabilisierung der Zellmenbranen erfolgen kann. Dadurch wird u. a. ein Schrumpfen des gebildeten Schaumstoffs verhindert. Ferner kann durch den Verbrauch an Schmelzwärme die Kerntemperatur kontrollierend gesteuert werden.

Weitere Vorteile sind die große Lagerstabilität der Kristallitsuspension, ihre niedrige Viskosität und die Feinteiligkeit der Sphärolithe bei gleichzeitiger enger Korngrößenverteilung.

Zu den für das erfindungsgemäße Verfahren verwendbaren Ausgangskomponenten ist folgendes auszuführen :

Als Polyisocyanate kommen aliphatische, cycloaliphatische, araliphatische und vorzugsweise aromatische mehrwertige Isocyanate in Frage. Im einzelnen seien beispielhaft genannt : Alkylendiisocyanate mit 4 bis 12 Kohlenstoffatomen im Alkylenrest, wie 1,12-Dodecamethylen-diisocyanat, Tetramethylendiisocyanat-1,4 und vorzugsweise Hexamethylen-diisocyanat-1,6 ; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (Isophoron-diisocyanat) 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

3

Häufig werden auch sogenannte modifizierte mehrwertige Isocyanate, d. h. Produkte die durch chemische Umsetzung obiger Di- und/oder Polyisocyanate erhalten werden, verwendet. Als modifizierte organische Di- und Polyisocyanate kommen beispielsweise in Betracht : Carbodiimidgruppen aufweisende Polyisocyanate gemäß DE-PS 1 092 007, Allophanatgruppen aufweisende Polyisocyanate, wie sie z. B. in der britischen Patentschrift 994 890, den ausgelegten Unterlagen des belgischen Patents 761 626 und der NL-OS 7 102 524 beschrieben werden, Isocyanuratgruppen aufweisende Polyisocyanate wie sie z. B. in den DE-PS 1 022 789, 1 222 067 und 1 027 394 sowie den DE-OS 1 929 034 und 2 004 048 beschrieben werden, Urethangruppen aufweisende Polyisocyanate, wie sie z. B. in den ausgelegten Unterlagen des belgischen Patents 752 261 oder der US-PS 3 394 164 beschrieben werden, acylierte Harnstoffgruppen aufweisende Polyisocyanate z. B. gemäß DE-PS 1 230 778, Biuretgruppen aufweisende Polyisocyanate z. B. gemäß DE-PS 1 101 394 und GB-PS 889 050 ; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 1 072 956, der US-PS 3 567 765 und der DE-PS 1 231 688 genannt werden.

Vorzugsweise kommen jedoch zur Anwendung : urethangruppenhaltige Polyisocyanate, beispielsweise mit niedermolekularen Diolen, Triolen oder Polyoxypropylenglykolen modifiziertes 4,4'-Diphenylmethan-diisocyanat oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Für die lagerstabilen Kristallitsuspensionen eignen sich als kohärente Phase (a) weiche, bei üblichen Verarbeitungstemperaturen für Polyurethane, z. B. bei 10 bis 30 °C, insbesondere 25 °C flüssige Polyole mit einer Funktionalität von 2 bis 8 und Hydroxylzahlen von 150 bis 800. Verwendet werden können auch Mischungen aus solchen Polyolen und löslichen harten, kristallinen Komponenten, mit der Maßgabe, daß die Mischung homogen und in dem genannten Temperaturbereich flüssig ist.

Als weiche Polyole in Betracht kommen beispielsweise : Polyester-polyole mit Funktionalitäten von 2 bis 6, vorzugsweise 2 bis 4 und Hydroxylzahlen von 200 bis 700, vorzugsweise von 280 bis 490 auf Basis von organischen Dicarbonsäuren, vorzugsweise aliphatischen Dicarbonsäuren mit 2 bis 12, vorzugsweise 4 bis 8 Kohlenstoffatomen im Alkylenrest und mehrwertigen Alkoholen, vorzugsweise Diolen. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind : 1,2- bzw. 1,3-Propylenglykol, Dipropylenglykol, 1,5-Pentamethylenglykol, 1,8-Octamethylenglykol, Decamethylenglykol-1,10, Glycerin, Trimethylolpropan, Pentaerythrit sowie Zuckeralkohole, z. B. Sorbit und vorzugsweise Äthylenglykol, Diäthylenglykol, 1,4-Butylenglykol und 1,6-Hexamethylenglykol. Als mehrwertige Alkohole können ferner Alkanolamine, Dialkanolamine und Trialkanolamine, z. B. Äthanolamin, Diäthanolamin, Triäthanolamin und Triisopropanolamin verwendet werden. Die genannten Dicarbonsäuren und mehrwertigen Alkohole können auch in Form von Mischungen eingesetzt werden. Besonders bewährt haben sich und daher vorzugsweise verwendet werden Polyesterpolyole aus Adipinsäure oder Mischungen aus Bernstein-, Glutar- und Adipinsäure und Diäthylenglykol und Alkoholmischungen aus Äthylenglykol/1,4-Butylenglykol, Äthylenglykol/Diäthylenglykol, Äthylenglykol/Trimethylolpropan, Diäthylenglykol/Trimethylolpropan, Äthylenglykol/Pentaerythrit, Äthylenglykol/Triisopropanolamin und Diäthylenglykol/Triisopropanolamin.

Die Polyester-polyole besitzen Molekulargewichte von ungefähr 220 bis 3 000 und vorzugsweise von 300 bis 800.

Anstelle der genannten Polyester-polyole, die einzeln oder als Gemische eingesetzt werden können, können auch homogene, bei 10 bis 30 °C flüssige Mischungen aus den oben genannten Polyesterpolyolen und löslichen harten organischen Komponenten, z. B. hydroxylgruppenhaltige Polyester aus aromatischen Dicarbonsäuren und vorzugsweise unsubstituierten, linearen Diolen, Anwendung finden.

Vorzugsweise als weiche Polyole für die kohärente Phase verwendet werden jedoch Polyätherpolyole mit Funktionalitäten von 2 bis 8, vorzugsweise 2 bis 4 und Hydroxylzahlen von 150 bis 800, vorzugsweise von 200 bis 600, die nach bekannten Verfahren, beispielsweise durch anionische Polymerisation mit Alkalihydroxiden, wie Natrium- oder Kaliumhydroxid oder Alkalialkoholaten, wie Natrium- oder Kaliummethylat, -äthylat oder Kaliumisopropylat als Katalysatoren oder durch kationische Polymerisation mit Lewissäuren, wie Antimonpentachlorid, Borfluorid-Ätherat u. a. als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht : Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Äthylendiamin, Diäthylentriamin, Triäthylentetramin, 1,3-Propylendiamin, 1,3-

4

bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan. Als Polyäther-polyole, hergestellt aus Verbindungen der erwähnten Gruppe sind besonders interessant N,N,N',N'-Tetrakis-(2-hydroxyäthyl)-äthylendiamin, N,N,N',N'-Tetrakis-(2-hydroxypropyl)-äthylendiamin, N,N,N',N'',N''-Pentakis-(2-hydroxypropyl)-diäthylentriamin, Phenyldiisopropanolamin und höhere Alkylenoxidaddukte von Anilin.

Als Startermoleküle kommen ferner in Betracht Alkanolamine, wie Äthanolamin, Diäthanolamin, N-Methyl- und N-Äthyläthanolamin, N-Methyl- und N-Äthyl-diäthanolamin und Triäthanolamin, Ammoniak, Hydrazin und Hydrazide. Vorzugsweise verwendet werden mehrwertige, insbesondere zwei- und/oder dreiwertige Alkohole, wie Äthylenglykol, Propylenglykol-1,2 und -1,3, Diäthylenglykol, Dipropylenglykol, Butylenglykol-1,4, Hexamethylenglykol-1,6- Glycerin, Trimethylol-propan, Pentaerythrit, Sorbit und Saccharose.

Die Polyäther-polyole besitzen Molekulargewichte von 200 bis 4 000 und vorzugsweise von 500 bis 3 000. Sie können ebenso wie die Polyester-polyole einzeln oder in Form von Mischungen verwendet werden.

Als kohärente Phase verwendet werden können auch Mischungen aus Polyester-polyolen und Polyäther-polyolen sowie hydroxylgruppenhaltige Polyesteramide und Polyacetale und deren Gemische, sofern sie den oben genannten Bedingungen entsprechen.

Als disperse Phase (b) zur Herstellung der lagerstabilen Kristallitsuspension eignen sich harte, Kristalline organische Komponenten, die mindestens ein Zerewitinoff-aktives Wasserstoffatom, beispielsweise in Form von mindestens einer —OH, —NH$_2$, =NH und/oder —COOH-Gruppe gebunden enthalten, Schmelzpunkte von 30 bis 260 °C, vorzugsweise von 40 bis 170 °C aufweisen und Molekulargewichte von 178 bis 100 000 und größer, vorzugsweise von 178 bis 15 000 und insbesondere 320 bis 4 000 besitzen.

Als kristalline Komponenten im Sinne der Erfindung sind hierbei organische Verbindungen zu verstehen, die vorzugsweise vollständig oder im wesentlichen vollständig kristallisiert sind. Verwendet werden können jedoch auch organische Verbindungen, die amorphe Anteile enthalten, sofern deren Gehalt unter 60 Gew.-%, vorzugsweise unter 40 Gew.-% und insbesondere unter 15 Gew.-%, bezogen auf das Gesamtgewicht liegt. Derartige Verbindungen werden als teilkristallin bezeichnet. Als harte kristalline Komponenten kommen beispielsweise in Betracht :

b1. harte, kristalline mono- bis tetra-funktionelle, vorzugsweise difunktionelle Polyesterole mit Hydroxylzahlen von 10 bis 500, vorzugsweise von 40 bis 240 und Schmelzpunkten nach Krämer-Sarnow-Nagel (KSN) von 30 bis 240 °C, vorzugsweise 50 bis 170 °C und insbesondere 70 bis 140 °C auf Basis von aromatischen und/oder aliphatischen Dicarbonsäuren und überwiegend symmetrischen Diolen.

Als Ausgangskomponenten zur Herstellung der harten kristallisierbaren Polyesterole seien beispielhaft genannt : aromatische Dicarbonsäuren, deren Anhydride und Diester mit ein- und zweiwertigen Alkoholen mit 1 bis 4 Kohlenstoffatomen, wie z. B. Isophthalsäure, Terephthalsäure und ortho-Phthalsäure, gegebenenfalls halogensubstituierte Phthalsäureanhydride, z. B. Phthalsäureanhydrid, Tetrachlor- und Tetrabromphthalsäureanhydrid, Phthalsäuredimethylester, Terephthalsäuredimethylester, Bis-2-hydroxyäthylterephthalat und Phthalsäuredibutylester ; aliphatische Dicarbonsäuren, deren Anhydride und Diester, welche gegebenenfalls auch copolymerisierbare Doppelbindungen enthalten können, wie z. B. Bernsteinsäure, Bernsteinsäureanhydrid, Glutarsäure, Adipinsäure, aliphatische Dicarbonsäuregemische aus Bernstein-, Glutar- und Adipinsäure sowie Maleinsäure, -anhydrid, Fumarsäure, -dimethylester, Endomethylentetrahydrophthalsäure, Hexachloroendomethylentetrahydrophthalsäure, Hexahydrophthalsäure, Tetrahydrophthalsäure, Hexahydrophthalsäureanhydrid und Tetrahydrophthalsäureanhydrid und zweiwertige symmetrische Alkohole, wie z. B. Äthylenglykol, 1,3-Propylen-, 1,4-Butylen-, 1,6-Hexamethylen-, 1,8-Octamethylen-, 1,10-Decamethylen- und Neopentylglykol, Pivalinsäureneopentylglykolester, Dibromneopentylglykol, 4,4'-Dihydroxy-dicyclohexyl-methan, 4,4'-Dihydroxy-dicyclohexyl-propan-2,2, Diäthylenglykol, Triäthylenglykol, 1,4-Dihydroxymethylcyclohexan, Butendiol-1,4, Bis-äthoxyliertes Bisphenol A und dessen vollständig hydriertes Derivat.

Zur Herstellung der kristallinen Polyesterole können in untergeordneten Mengen zusätzlich mono- und polyfunktionelle Carbonsäuren, Monoalkohole, unsymmetrisch aufgebaute Diole und mehrwertige Alkohole mitverwendet werden. Genannt seien beispielsweise Monocarbonsäuren, wie Benzoesäure und 2-Äthylhexansäure, und Polycarbonsäuren, wie Trimellitsäure, die in Mengen bis zu 10 Mol.-%, bezogen auf die verwendeten aromatischen und/oder aliphatischen Dicarbonsäuren oder -derivate eingesetzt werden können. In Mengen bis zu 15 Mol.-%, bezogen auf symmetrische zweiwertige Alkohole, können unsymmetrisch aufgebaute Diole, wie z. B. 1,2-Propylenglykol, Dipropylenglykol und mehrwertige Alkohole, wie z. B. Glycerin und Trimethylolpropan verwendet werden, während Monoalkohole wie z. B. Benzylalkohol, Hexanol-1 und 2-Äthylhexanol in Mengen bis zu 20 Mol.-%, bezogen auf symmetrische zweiwertige Alkohole zugesetzt werden können.

Die kristallisierbaren harten Polyesterole, die beispielsweise durch Schmelzkondensation hergestellt werden können, fallen vielfach in amorpher Form an. Je nach Struktur der Produkte kristallisieren sie rasch aus oder kristallisieren überhaupt nicht. Sie kristallisieren jedoch stets beim Erwärmen in einem Lösungsmittel, z. B. Äthanol, oder in den als kohärente Phase verwendbaren Polyester- und/oder Polyätherpolyolen. Wie bereits dargelegt wurde, müssen die Ausgangskomponenten so gewählt werden, daß der Schmelzbereich zwischen 30 und 240 °C liegt. Geeignete Polyesterole besitzen üblicherweise Molekulargewichte von 220 bis ungefähr 10 000.

b2. Oligoamide mit Molekulargewichten von 142 bis 5 000, vorzugsweise von 500 bis 3 000, hergestellt durch Polykondensation von aliphatischen oder aromatischen Dicarbonsäuren mit aliphatischen primären und/oder sekundären Diaminen im Molverhältnis 1 : 1,05 bis 1 : 2, vorzugsweise 1 : 1,2 bis 1 : 1,6. Als Ausgangskomponente zur Herstellung der Oligoamide seien beispielsweise genannt aliphatische Dicarbonsäuren, wie Bernstein-, Glutar- und Adipinsäure und deren Gemische, aromatische Dicarbonsäuren, wie Phthalsäure und Terephthalsäure und die entsprechenden Dicarbonsäureester, wie Adipin-, Glutar-, Bernstein-, Phthal- und Terephthalsäuredimethylester und aliphatische primäre und sekundäre Diamine sowie Alkanolamine, wie z. B. Äthylendiamin, Hexamethylendiamin, Äthanolamin und Diäthanolamin und vorzugsweise Piperazin. Insbesondere verwendet werden Oligoamid hergestellt aus einem Bernstein-, Glutar- und Adipinsäuregemisch und Piperazin mit einem Molekulargewicht von ungefähr 1 500 und aus Phthalsäure und Piperazin mit einem Molekulargewicht von ungefähr 400.

b3. Kristalline Oligo- oder Polyesteramine mit Molekulargewichten von 400 bis 5 000, vorzugsweise von 550 bis 3 000 hergestellt durch Polykondensation von aliphatischen, cycloaliphatischen und/oder aromatischen Diolen und aromatischen Aminocarbonsäuren oder -estern, wobei ein Teil der Aminocarbonsäuren durch aromatische Dicarbonsäuren oder deren Dialkylester mit monofunktionellen $C_1$- bis $C_4$-Alkoholen ersetzt werden kann. Ferner ist ein teilweiser Ersatz der aromatischen durch aliphatische Dicarbonsäuren möglich. Die Oligo- oder Polyesteramine enthalten im allgemeinen 20 bis 80 Mol.-% aromatische Aminocarbonsäuren, bezogen auf die Gesamtmenge an Carbonsäuren, und werden in solchen molaren Mengen kondensiert, daß das Verhältnis von Carboxyl- oder Estergruppen der Carbonsäuren zu Hydroxylgruppen der Diole 1 : 0,5 bis 1 : 1,9, vorzugsweise 1 : 0,8 bis 1 : 1,5 und insbesondere ungefähr 1 : 1 beträgt. Als geeignete Ausgangskomponenten seien beispielhaft genannt : Diole, wie Äthylenglykol, Butandiol-1,4, Hexandiol-1,6, Octandiol-1,8, Decandiol-1,10, Neopentylglykol, Dibromneopentylglykol, 4,4'-Dihydroxy-dicyclohexyl-methan, 4,4'-Dihydroxy-dicyclohexyl-propan-2,2, 1,4-Dihydroxymethylcyclohexan, Bis-äthoxyliertes Bisphenol A und dessen vollständig hydriertes Derivat, aromatische Aminocarbonsäuren und deren Ester, wie p-Aminobenzoesäure, -methylester und -äthylester, aromatische Dicarbonsäuren und -diester, wie Isophthalsäure, Terephthalsäure und ortho-Phthalsäure und die entsprechenden -dimethylester, und aliphatischen Dicarbonsäuren, wie Bernstein- und Adipinsäure.

Eine andere Methode zur Herstellung von Oligo- oder Polyesteraminen schließt die Verwendung von β-Hydroxyalkyl-arylaminen, wie z. B. β-Hydroxyäthylanilin, ein, die gegebenenfalls mit den obengenannten Diolen und Dicarbonsäuren bzw. deren Ester kondensiert werden.

Ebenso wie die Polyesterole fallen die Oligo- oder Polyesteramine beim Erkalten der Schmelzen als amorphe oder kristalline Produkte mit Schmelzpunkten bis ungefähr 190 °C (nach KSN) an. Die Einsatzstoffe zur Polykondensation sind so zu wählen, daß die Oligo- bzw. -Polyesteramine nach der Kristallisation in einem Lösungsmittel, wie Äthanol, oder in einem Polyäther- bzw. Polyester-polyol einen Schmelzbereich zwischen 30 °C und 190 °C besitzen.

Kristalline Oligo- oder Polyurethane mit Molekulargewichten von 280 bis 5 000, vorzugsweise von 400 bis 3 000 werden hergestellt durch Polyaddition aus organischen Diisocyanaten, wie z. B. 4,4'-Diisocyanato-diphenylmethan, und Hexamethylen-diisocyanat und aliphatischen Diolen, wie z. B. Butandiol-1,4, Hexandiol-1,6, Äthylenglykol, Diäthylenglykol und Triäthylenglykol im Molverhältnis 1 : 1,05 bis 1 : 2, vorzugsweise 1 : 1,3 bis 1 : 2. Besonders bewährt haben sich Oligourethane aus 4,4'-Diisocyanato-diphenylmethan und Hexandiol-1,6 mit einem Molekulargewicht von ungefähr 500.

b5. Kristalline und/oder teilkristalline amino- oder vorzugsweise hydroxylgruppenhaltige Polyäther mit Molekulargewichten von 600 bis 20 000, vorzugsweise von 800 bis 10 000 und Schmelzpunkten von 30 bis 180 °C. Die Produkte können beispielsweise hergestellt werden durch Polymerisation von Alkylenoxiden, wie Äthylenoxid, Cyclohexenoxid, Styroloxid und Tetrahydrofuran nach bekannten Verfahren in Gegenwart von Startermolekülen.

b6. Polyacetale und Polyacetalcopolymere mit Molekulargewichten von 600 bis 100 000, vorzugsweise von 1 000 bis 18 000 und Schmelzpunkten von 40° bis 180 °C. Genannt seien beispielsweise Polyoxymethylene und Butandiolformale.

Die harten kristallinen organischen Komponenten, die in Mengen von 0,5 bis 50 Gew.%, vorzugsweise 1 bis 30 Gew.%, bezogen auf das Gesamtgewicht der Kristallitsuspension dispergiert in der kohärenten Phase (a) vorliegen, können sowohl einzeln als auch in Form von Mischungen eingesetzt werden. Vorzugsweise verwendet werden harte Polyesterole, Polyesteramine und Polyacetale.

Zur Herstellung der lagerstabilen Kristallitsuspensionen werden die weichen Polyole und die harten kristallinen organischen Komponenten bei Raumtemperatur gemischt und in der Wärme, beispielsweise bei Temperaturen von 70° bis 300 °C, vorzugsweise 100 bis 180 °C, gegebenenfalls in Gegenwart von Emulgatoren, z. B. Polyalkylenäthermischpolymerisaten, wie sie in der DE-OS 26 57 803 beschrieben werden, und unter Rühren gelöst. Die erhaltene homogene Lösung läßt man unter Rühren abkühlen, dabei kristallisiert die harte Komponente, beispielsweise in Form von feinen Blättchen oder Sphärolithen aus. Die Sphärolithe in der kohärenten Phase besitzen durchschnittliche Teilchendurchmesser von 1 bis 100 μm, vorzugsweise 5 bis 60 μm.

Die lagerstabilen Kristallitsuspensionen können gegebenenfalls vor der Verarbeitung mit den oben genannten Polyester- und/oder Polyäther-polyolen verdünnt, d. h. auf den optimalen Gehalt an kristallinen, harten Komponenten eingestellt werden.

6

Zu Treibmitteln, welche im erfindungsgemäßen Verfahren zur Herstellung der Schaumstoffe verwendet werden können, gehört Wasser, das mit Isocyanatgruppen unter Bildung von Kohlendioxid reagiert. Die Wassermengen, die zweckmäßigerweise verwendet werden, betragen 0,1 bis 3 %, bezogen auf das Gewicht an Polyisocyanat, bzw. 0,1 bis 2 %, bezogen auf das Gesamtgewicht von Polyisocyanat und Kristallitsuspension. Gegebenenfalls können auch größere Wassermengen verwendet werden.

Andere verwendbare Treibmittel sind niedrig siedende Flüssigkeiten, die unter dem Einfluß der exothermen Polymerisation- bzw. Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Schaumstoffe hängt ab von der Schaumdichte, die man erreichen will sowie gegebenenfalls von der Mitverwendung von Wasser. Im allgemeinen liefern Mengen von 5 bis 40 Gew.%, bezogen auf 100 Gewichtsteile organisches Polyisocyanat, bzw. 2 bis 30 %, bezogen auf das Gesamtgewicht von Polyisocyanat und Kristallitsuspension, zufriedenstellende Ergebnisse.

Geeignete Katalysatoren zur Beschleunigung der Polyurethanbildung zwischen der Kristallitsuspension, gegebenenfalls Wasser und den Polyisocyanaten sind beispielsweise tertiäre Amine, wie Dimethylbenzylamin, N,N,N′,N′-Tetramethyldiamino-äthyläther, Bis-(dimethylaminopropyl)-harnstoff, N-Methyl- bzw. N-Äthylmorpholin, Dimethylpiperazin, 1,2-Dimethylimidazol, 1-Aza-bicyclo-(3,3,0)-octan und vorzugsweise Triäthylendiamin, Metallsalze, wie Zinndioctoat, Bleioctoat, Zinn-diäthylhexoat und vorzugsweise Zinn-(II)-salze und Dibutylzinndilaurat sowie insbesondere Mischungen aus tert. Aminen und organischen Zinnsalzen. Vorzugsweise verwendet werden 0,1 bis 5,0 Gew.% Katalysator auf Basis tertiärer Amine und/oder 0,01 bis 1,0 Gew.% Metallsalze, bezogen auf das Gewicht der Kristallitsuspension.

Zur Herstellung von isocyanuratgruppenhaltigen Schaumstoffen haben sich die üblichen Cyclisierungs- und Polymerisationskatalysatoren für Polyisocyanate bewährt. Als Beispiele seien genannt : starke Basen, wie quarternäre Ammoniumhydroxide, beispielsweise Benzyltrimethylammoniumhydroxid ; Alkalimetallhydroxide, beispielesweise Natrium- oder Kaliumhydroxid ; Alkalimetallalkoxide, beispielsweise Natriummethylat und Kaliumisopropylat ; Trialkylphosphine, beispielsweise Triäthylphosphin ; Alkylaminoalkylphenole, beispielsweise 2,4,6-Tris-(dimethylaminomethyl)-phenol ; 3- und/oder 4-substituierte Pyridine, beispielsweise 3- oder 4-Methylpyridin ; metall-organische Salze, beispielsweise Tetrakis-(hydroxyäthyl)-natriumborat ; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-äthyl-hexoat, Kaliumbenzoat, Natriumpikrat und Phthalimid-kalium. Vorzugsweise verwendet werden die stark basischen N,N′,N″-Tris-(dialkylaminoalkyl)-s-hexahydrotriazine, beispielsweise das N,N′,N″-Tris-(dimethylaminopropyl)-s-hexahydrotriazin, gegebenenfalls in Kombination mit aliphatischen niedermolekularen Mono- und/oder Dicarbonsäuren, beispielsweise Essigsäure und/oder Adipinsäure oder aromatischen Carbonsäuren, wie Benzoesäure.

Die geeignete Menge an Isocyanuratgruppen bildenden Katalysatoren ist abhängig von der Wirksamkeit des in Frage kommenden Katalysators. Im allgemeinen hat es sich als zweckmäßig erwiesen, 1 bis 15 Gewichtsteile, vorzugsweise 3,5 bis 10 Gewichtsteile Katalysator für jeweils 100 Gewichtsteile an organischem Polyisocyanat zu verwenden.

Zur Herstellung von isocyanuratgruppenhaltigen Polyurethanschaumstoffen können die die Urethan- und Isocyanuratgruppenbildung fördernde Katalysatoren auch gemischt werden.

Der schaumfähigen Reaktionsmischung aus Polyisocyanaten, Kristallitsuspensionen, Treibmittel und Katalysator können, wie bereits ausgeführt wurde, gegebenenfalls noch Hilfs- und Zusatzstoffe einverleibt werden. Genannt seien beispielsweise Kettenverlängerungsmittel, organische und anorganische Füllstoffe, oberflächenaktive Schaumstabilisatoren, Hydrolyseschutzmittel, Porenregler, fungistatisch und bakteriostatisch wirkende Substanzen, Farbstoffe, Pigmente und Flammschutzmittel.

Nach dem erfindungsgemäßen Verfahren werden die Hartschaumstoffe, vorzugsweise ohne zusätzliche Mitverwendung von üblichen Kettenverlängerungsmitteln oder Vernetzern hergestellt. Dennoch hat es sich in manchen Fällen, beispielsweise aus verarbeitungstechnischen Gründen, als zweckmäßig erwiesen, Kettenverlängerungsmittel oder Vernetzer einzusetzen. Geeignete Kettenverlängerungsmittel oder Vernetzer besitzen Molekulargewichte von 30 bis 600, vorzugsweise 60 bis 300 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie Propandiol, Pentandiol, Hexandiol-1,6 und vorzugsweise Äthandiol, Butandiol-1,4 und Bis-(2-hydroxyäthyl)-hydrochinon, Diamine, wie Äthylendiamin und gegebenenfalls 3,3′- bzw. 3,3′,5,5′-di- bzw. tetrasubstituierte 4,4′-Diaminodiphenylmethane, Äthanolamine, wie Triäthanolamin und Polyhydroxylverbindungen, wie Glycerin, Trimethylolpropan und niedermolekulare hydroxylgruppenhaltige Polyalkylenoxide aus den vorgenannten Ausgangsstoffen.

Der Kristallitsuspension können auch Füllstoffe, beispielsweise organische und anorganische Füllstoffe, mit Teilchengrößen kleiner als 10 μm, vorzugsweise von 0,1 μm bis 5 μm in Mengen von 5 bis 30 Gew.%, vorzugsweise von 10 bis 20 Gew.%, bezogen auf das Gesamtgewicht der Kristallitsuspension einverleibt werden.

Als organische Füllstoffe seien beispielhaft genannt :

Sprödharze, wie sie bekannt sind als Bindemittel für die Druckindustrie, z. B. solche auf Basis Phenol, Kolophonium oder Melamin und Formaldehyd, Polyester mit Schmelzpunkten größer 190 °C, vorzugsweise vernetzte Polyester auf Basis von di- oder höherfunktionellen Carbonsäuren mit di- oder höherfunktionellen Alkoholen, Copolymere des Styrols mit Monomeren wie (Meth)-acrylsäurederivaten, Homo- und Copolymerisate des Cyclopentadiens, Ketonharze, z. B. auf Basis von Cyclohexanon und spröde Polyurethanmaterialien, mit Schmelzpunkten größer als 190 °C, beispielsweise vernetzte Polyurethane und Isocyanuratgruppen enthaltende Polyurethane, Polyvinylchlorid, Polyamid-6 und -6,6, Acrylatpropfkautschuke, Butadienpropfkautschuke sowie Polyvinylacetat.

Besonders bewährt haben sich und daher vorzugsweise verwendet werden jedoch anorganische Füllstoffe, wie die an sich bekannten üblichen Füllstoffe, Verstärkungsmittel, Beschwerungsmittel, Mittel zur Verbesserung des Abriebverhaltens in Anstrichfarben, Beschichtungsmittel usw. Verwendet werden können jedoch auch anorganische Pigmente. Im einzelnen seien beispielhaft genannt : silikatische Mineralien, beispielsweise Schichtsilikate, wie Antigorit, Serpentin, Hornblenden, Amphibole, Chrisotil, Talkum, Metalloxide, wie Kaolin, Aluminiumoxidhydrat, Titanoxide, Eisenoxide, Metallsalze, wie Kreide, Schwerspat, Bariumsulfat, anorganische Pigmente, wie Cadmiumsulfid, Zinksulfid sowie Glas.

Als Hilfsmittel genannt seien ferner beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Rizinolsäureester und Türkischrotöl, die in Mengen von 0,1 bis 5 Gewichtsteilen pro 100 Gewichtsteile der Mischung aus Polyisocyanat und Kristallitsuspension angewandt werden.

Geeignete Flammschutzmittel sind beispielsweise Trikresylphosphat, Tris-2-chloräthylphosphat, Tris-chlorpropylphosphat und Tris-2,3-dibrompropylphosphat.

Außer den bereits genannten halogensubstituierten Phosphaten können auch anorganische Flammschutzmittel, wie Antimontrioxid, Arsenoxid, Ammoniumphosphat, Ammoniumsulfat, Aluminiumoxidhydrat und elementarer Phosphor sowie Isocyanursäurederivate, wie Melamin, Dicyan-diamid und Guanidinsalze, z. B. Guanidincarbonat, zum Flammfestmachen der Schaumstoffe verwendet werden. Im allgemeinen hat es sich als vorteilhaft erwiesen, 5 bis 50 Gewichtsteile, vorzugsweise 5 bis 25 Gewichtsteile der genannten Flammschutzmittel für jeweils 100 Gewichtsteile der Mischung aus organischem Polyisocyanat und Kristallitsuspension zu verwenden.

Nähere Angaben über die oben genannten anderen üblichen Zusatzstoffe sind der Fachliteratur, beispielsweise der Monographie von J. H. Saunders und K. C. Frisch « High Polymers » Band XIV, Polyurethanes, Teil 1 und 2, Verlag Interscience Publishers 1962 bzw. 1964, zu entnehmen.

Zur Herstellung von urethangruppenhaltigen Schaumstoffen werden die organischen Polyisocyanate und Kristallitsuspensionen bzw. Mischungen aus Kristallitsuspensionen und zusätzlichen Polyester- und/oder Polyätherpolyolen in solchen Mengen zur Umsetzung gebracht, daß das Verhältnis von reaktiven Wasserstoffatomen zu NCO-Gruppen 1 : 0,8 bis 2,5, vorzugsweise 1 : 0,9 bis 1,2 und insbesondere ungefähr 1 : 1 beträgt und der Anteil an disperser Phase (b) in der schaumfähigen Reaktionsmischung 0,5 bis 50 Gew.%, vorzugsweise 1 bis 30 Gew.%, bezogen auf das Gewicht der kohärenten Phase (a) beträgt.

Zur Herstellung von urethangruppenhaltigen Polyisocyanuratschaumstoffen haben sich Mengenverhältnisse von NCO-Gruppen der Polyisocyanate zu reaktiven Wasserstoffatomen der Kristallitsuspension von 2 bis 60 : 1, vorzugsweise von 2 bis 10 : 1 bewährt. Der Anteil an disperser Phase (b) in der schaumfähigen Reaktionsmischung beträgt auch hier 0,5 bis 50 Gew.%, vorzugsweise 1 bis 30 Gew.%, bezogen auf das Gewicht der kohärenten Phase (a).

Die urethan- und/oder isocyanuratgruppenhaltigen Schaumstoffe werden vorzugsweise nach dem one shot-Verfahren hergestellt. Hierzu mischt man die Polyisocyanate mit der Kristallitsuspension, den Katalysatoren, Treibmittel und gegebenenfalls Hilfs- und Zusatzstoffen intensiv in den genannten Mengenverhältnissen bei Temperaturen von 0 bis 50 °C vorzugsweise 15 bis 40 °C und läßt danach die Reaktionsmischung in offenen oder geschlossenen Formen aufschäumen.

Die erfindungsgemäß hergestellten Polyurethanschaumstoffe besitzen bei freier Aufschäumung Dichten von 10 bis 300 g/l, vorzugsweise von 60 bis 130 g/l. Die urethangruppenhaltigen Polyisocyanuratschaumstoffe besitzen Dichten von 5 bis 100 g/l, vorzugsweise von 10 bis 50 g/l.

Die Schaumstoffe finden Verwendung als Isoliermaterialien in Kühlaggregaten, zum Verkleiden von Rohren und auf dem Bausektor.

Die in den Beispielen genannten Teile beziehen sich auf das Gewicht.

Beispiele 1 bis 32

Herstellung der Kristallitsuspension

Die kristallinen bzw. teilkristallinen harten Komponenten und die als kohärente Phase verwendbaren

**0 032 380**

weichen Polyole werden in den in Tabelle 3 genannten Mengen erwärmt bis eine homogene Lösung, gegebenenfalls mit schwacher Trübung gebildet wurde. Anschließend läßt man die Lösung unter Rühren, gegebenenfalls in Gegenwart eines Emulgators abkühlen. Hierbei scheiden sich die harten kristallinen Komponenten als feinteilige disperse Phase ab. Sämtliche hergestellten Kristallitsuspensionen waren lagerstabil.

Als kohärente Phase wurden die in Tabelle 1 zusammengestellten weichen Polyole I bis X verwendet :

Als disperse Phase wurden die in Tabelle 2 zusammengestellten harten kristallinen Komponenten A bis Z verwendet.

## Tabelle 1
### Zusammenfassung der weichen Polyole(kohärente Phase)

| Abkürzung | Zusammensetzung | OH-Zahl |
|---|---|---|
| I | Diäthylenglykoladipat | 345 |
| II | Diäthylenglykoladipat | 341,6 |
| III | Diäthylenglykoladipat | 344 |
| IV | Polyester-polyol aus einem Bernstein- (30 %), Glutar- (40 %), Adipinsäure- (30 %) -Gemisch und einer Mischung aus Äthylenglykol und Pentaerythrit | 330 |
| V | Mischung aus: <br><br> 30 Gewichtsteilen eines Polyester-polyols aus 1 Mol Phthalsäure und 1,35 Molen Äthylenglykol (OH-Zahl 131) und <br> 70 Gewichtsteilen II | 248 |
| VI | Mischung aus: <br> 30 Gewichtsteilen eines Polyester-polyols aus 1 Mol Phthalsäure und 2 Molen Diäthylenglykol (OH-Zahl 362) und <br> 70 Gewichtsteilen IV | 344 |
| VII | Mischung aus: <br> 30 Gewichtsteilen eines Polyester-polyols aus 1 Mol Phthalsäure und 2 Molen Dipropylenglykol (OH-Zahl 271) und <br> 70 Gewichtsteilen I | 323 |
| VIII | Mischung aus: <br> 30 Gewichtsteilen eines Polyesteramids aus 2 Molen p-Aminobenzoesäure und 1 Mol Neopentylglykol (Aminzahl 241) und <br> 70 Gewichtsteilen III | 241 (Aminzahl: 72) |
| IX | Polyäther-polyol-Mischung auf Basis von <br> 66 Gewichtsteilen Sucrose/Propylenoxid <br> 20 Gewichtsteilen Glycerin/Propylenoxid und <br> 13,6 Gewichtsteilen Wasser/Propylenoxid | 400 |
| X | Polyätherpolyol-Mischung auf Basis von <br> 83 Gewichtsteilen eines Sorbit/Wasser/Propylenoxid und <br> 17 Gewichtsteilen eines Glycerin/Propylenoxid | 460 |

0 032 380

## Tabelle 2
### Zusammensetzung der harten kristallinen Komponenten (disperse Phase)

| Abkürzung | Zusammensetzung | OH-Zahl | Schmelzpunkt[+] °C |
|---|---|---|---|
| A | Polyesterol aus 1 Mol Isophthalsäure, 2 Molen Neopentylglykol und 0,06 Mol Äthylenglykol | 314 | 85 |
| B | Polyesterol aus 1 Mol Isophthalsäure, 1,38 Molen Neopentylglykol und 0,06 Mol Äthylenglykol | 99 | 115 |
| C | Polyesterol aus 0,5 Mol Terephthalsäure, 0,5 Mol Phthalsäure und 1,36 Mol Äthylenglykol | 149 | 55 |
| D | Polyesterol hergestellt durch Ver- bzw. Umesterung von 1 Mol Terephthalsäure, 1 Mol eines Dimethylestergemisches der Bernstein-, Glutar- und Adipinsäure und 2,35 Mol Äthylenglykol | 64 | nicht bestimmt |
| E | Polyesterol aus 1 Mol Terephthalsäure, 0,5 Mol Bernsteinsäure und 1,85 Mol Äthylenglykol | 129 | 171 |
| F | Polyesterol aus 1 Mol Terephthalsäure, 0,5 Mol Adipinsäure und 1,85 Mol Äthylenglykol | 310 | 170 |
| G | Polyesterol aus 1 Mol Terephthalsäure, 1,3 Mol Neopentylglykol und 0,06 Mol Äthylenglykol | 129 | 121,5 |
| H | Oligoamid aus 1 Mol eines Dimethylester gemisches der Bernstein-, Glutar- und Adipinsäure und 1,3 Mol Piperazin, 3,5 % $NH_2$-gruppen | Aminzahl: 125 | 175 amorph 200 krist.. in Äthanol |

* ermittelt nach KSN

Tabelle 2 (Fortsetzung)

| Abkürzung | Zusammensetzung | OH-Zahl | Schmelzpunkt[+] °C |
|---|---|---|---|
| I | ⬡-NH-CH$_2$-CH$_2$O-CO-⬡-CO-OCH$_2$-CH$_2$-NH-⬡ | 127 | 167,5 |
| J | HO-(CH$_2$)$_6$-O-CO-NH-⬡-CH$_2$-⬡-NH-CO-O-(CH$_2$)$_6$-OH | 230 | 150 |
| K | Oligourethan aus 1 Mol Hexamethylendiisocyanat und 2 Mol Hexandiol-1,6 | 277 | 123 |
| L | Oligourethan aus 1 Mol Hexamethylendiiso-cyanat und 2 Mol Butandiol-1,4 | 322 | 158 |
| M | Oligourethan aus 1 Mol 4,4'-Diphenylmethan-diisocyanat und 2 Mol Butandiol-1,4 | 260 | 224 |
| N | Oligourethan aus 1 Mol 4,4'-Diphenylmethan-diisocyanat und 2 Mol Äthylenglykol | 299 | 255 |
| O | Oligoesteramin aus 1 Mol Dimethylterephthalat 2 Mol Hexandiol-1,6 und 2 Mol p-Aminobenzoesäure-äthylester | 88,6 | 92,7 |

Tabelle 2 (Fortsetzung)

| Abkürzung | Zusammensetzung | OH-Zahl | Schmelzpunkt[+] °C |
|---|---|---|---|
| P | Oligoesteramin aus 1 Mol Dimethylterephthalat 2 Mol Butandiol-1,4 und 2 Mol p-Aminobenzoesäure-äthylester | 127 | 167,5 |
| Q | Oligoamid aus 1 Mol Phthalsäuredimethylester und 1,3 Mol Piperazin | 8 Gew.% N | 97,5 |
| R | Polyäthylenglykol | 74,8 | 45 |
| S | Polyäthylenglykol | 18,7 | 60 |
| T | Polytetrahydrofuran | 112,2 | 50-70 |
| U | Polyäthylen-Polypropylenglykol | 16,5 | 45 |
| V | Polytetrahydrofuran mit $NH_2$-Endgruppen (hergestellt durch Anlagerung von Acrylnitril an die OH-Gruppe von Polytetrahydrofuran und Hydrierung der Nitrilgruppe) | Aminzahl: 16,5 | 50-70 |
| W | Polytetrahydrofuran | 56,1 | 50-70 |
| X | Polyacetal der Formel $-((CH_2)_4-OCH_2-O-)_x$ | 7,5 | 45-60 |
| Y | " " " " | 11,2 | 45-60 |
| Z | " " " " | 14 | 45-60 |

0 032 380

Tabelle 3
Kristallitsuspensionen Zusammenfassung der Ausgangskomponenten und deren Mengen

| Beispiel | disperse Phase | | kohärente Phase | | Viskosität |
| | Art | Menge [Gew.-Teile] | Art | Menge [Gew.-Teile] | [mPas 23°C] |
|---|---|---|---|---|---|
| 1 | B | 30 | I | 70 | 2 360 |
| 2 | D | 30 | III | 70 | 1 880 |
| 3 | E | 30 | II | 70 | 2 635 |
| 4 | A | 30 | IV | 70 | 17 050 |
| 5 | H | 30 | I | 70 | 14 540 |
| 6 | C | 30 | I | 70 | 3 145 |
| 7 | G | 30 | I | 70 | thixotrop |
| 8 | H | 10 | IX | 90 | 11 380 |
| 9 | I | 10 | X | 90 | 16 925 |
| 10 | J | 20 | I | 80 | nicht gemessen |
| 11 | nach Bsp. 1 | 15 | V | 50 | " " |
| 12 | " " 1 | 15 | VI | 50 | " " |
| 13 | " " 1 | 15 | VIII | 50 | " " |
| 14 | " " 1 | 15 | IX | 50 | " " |
| 15 | " " 1 | 15 | VII | 50 | " " |
| 16 | B | 10 | IX | $90^+$ | " " |
| 17 | K | 10 | IX | 90 | " " |
| 18 | L | 10 | IX | 90 | " " |

## Tabelle 3
### Kristallitsuspensionen Zusammenfassung der Ausgangskomponenten und deren Mengen

| Beispiel | disperse Phase | | kohärente Phase | | Viskosität | |
| --- | --- | --- | --- | --- | --- | --- |
| | Art | Menge [Gew.-Teile] | Art | Menge [Gew.-Teile] | [Gew.-Teile] | [mPas 23°C] |
| 19 | M | 10 | IX | 90 | nicht gemessen | |
| 20 | N | 10 | IX | 90 | " | " |
| 21 | O | 10 | I | 90 | " | " |
| 22 | P | 10 | I | 90 | " | " |
| 23 | Q | 10 | I | 90 | " | " |
| 24 | R | 10 | IX | 90 | " | " |
| 25 | S | 10 | IX | 90 | " | " |
| 26 | T | 10 | IX | 90 | " | " |
| 27 | U | 10 | IX | 90 | " | " |
| 28 | V | 10 | IX | 90 | " | " |
| 29 | W | 10 | IX | 90 | " | " |
| 30 | X | 10 | IX | 90 | " | " |
| 31 | Y | 10 | IX | 90 | " | " |
| 32 | Z | 10 | IX | 90 | " | " |

* plus 0,11 Gew.-Teile eines Emulgators, hergestellt durch Copolymerisation von Styrol (33,3 Gew.%) und einem Polyätheraddukt (66,6 Gew.%) aus Maleinsäureanhydrid (1 Gew.%) und Bernsteinsäureanhydrid (1 Gew.%) an Polyäthylenglykol (Mol.-Gewicht 9 000).

Beispiele 33 bis 74

Herstellung der Schaumstoffe

Allgemeine Herstellungsvorschrift :

A-Komponente : Mischung aus
Kristallitsuspension
Vernetzer
Trichlorfluormethan
Schaumstabilisator und
Katalysator

B-Komponente : Mischung aus
Diphenylmethan-diisocyanaten und Polyphenyl-polymethylen-polyisocyanaten (Roh-MDI ; NCO-Gehalt : 31 Gew.%)

Die Komponente A und die Komponente B werden bei 23 °C intensiv gemischt und in einem Karton (Größe 22 × 22 × 20 cm) aufschäumen lassen.
Die Art und Mengen der verwendeten Ausgangskomponenten sowie die Eigenschaften der erhaltenen Schaumstoffe sind in Tabelle 4 zusammengefaßt.

In Tabelle 4 bedeuten :

Katalysatoren :
DMEA  : Dimethyläthanolamin
TREDA : Triäthylendiamin
HHT     : Tris-(N,N-dimethylaminopropyl)-s-hexahydrotriazin

Schaumstabilisatoren :
OS 710 :    Schaumstabilisator auf Silikonbasis OS 710 der Bayer AG, Leverkusen
DC 190 : ⎫ Schaumstabilisatoren auf Silikonbasis ; DC 190 bzw.
DC 193 : ⎭ DC 193 der Firma Dow Corning Corp., Midland, Michigan

$$KZ : Kennzahl = \frac{Isocyanatmenge \ (praktisch) \cdot 100}{Isocyanatmenge \ (theoretisch)}$$

(Siehe Tabelle 4 Seite 17 ff.)

## Tabelle 4
## Herstellung der Schaumstoffe

| Bei-spiel | Kristallitsuspension Art nach Bei-spiel | Menge [g] | Roh-MDI Menge [g] | KZ | Schaumstabilisator Art | Menge [g] | Katalysator Art | Menge [g] | Vernetzer Art | Menge [g] | CCl$_3$F [g] |
|---|---|---|---|---|---|---|---|---|---|---|---|
| 33 | 1 | 300 | 216,1 | 110 | OS 710 | 4 | H$_2$O | 3 | – | – | 40,0 |
|  |  |  |  |  |  |  | DMEA | 3 |  |  |  |
|  |  |  |  |  |  |  | TREDA | 4,1 |  |  |  |
| 34 | 1 | 150 | 196,5 | 200 | DC 193 | 1 | HIIT | 3 | – | – | 46,9 |
| 35 | 1 | 150 | 210 | 200 | DC 193 | 1 | HIIT | 3 | Glycerin | 5 | 49,4 |
| 36 | 1 | 150 | 315,0 | 300 | DC 193 | 1 | HIIT | 3 | Glycerin | 5 | 63,4 |
| 37 | 1 | 150 | 294,7 | 300 | DC 193 | 1 | HIIT | 3 | – | – | 60,0 |
| 38 | 2 | 150 | 196,34 | 200 | DC 193 | 1 | HIIT | 3 | – | – | 46,9 |
| 39 | 3 | 150 | 215,9 | 200 | DC 193 | 1 | HIIT | 3 | – | – | 49,6 |
| 40 | 4 | 150 | 242,71 | 200 | DC 193 | 1 | HIIT | 3 | – | – | 53,1 |
| 41 | 1 / I | 100 / 50 | 218,06 | 200 | DC 193 | ·1 | HIIT | 2 | – | – | 49,8 |
| 42 | 6 | 150 | 207,35 | 200 | DC 193 | 1 | HIIT | 3 | – | – | 48,4 |
| 43 | 7 | 150 | 203 | 200 | DC 193 | 1 | HIIT | 3 | – | – | 56,5 |
| 44 | 8 | 150 | 268 | 200 | DC 193 | 1 | HIIT | 5 | – | – | 56,5 |
| 45 | 8 | 150 | 402 | 300 | DC 193 | 1 | HIIT | 5 | – | – | 47 |
| 46 | 9 | 150 | 316,9 | 200 | DC 193 | 1 | HIIT | 5 | – | – | 63 |
| 47 | 10 / I | 75 / 75 | 242,35 | 200 | DC 193 | 1 | HIIT | 3 | – | – | 53,1 |
| 48 | 10 / I | 75 / 75 | 363,52 | 300 | DC 193 | 1 | HIIT | 3 | – | – | 69,3 |

## Tabelle 4
### Herstellung der Schaumstoffe

| Bei-spiel | Kristallitsuspen-sion Art nach Bei-spiel | Menge [g] | Roh-MDI Menge [g] | KZ | Schaumstabilisator Art | Menge [g] | Katalysator Art | Menge [g] | Vernetzer Art | Menge [g] | $CCl_3F$ [g] |
|---|---|---|---|---|---|---|---|---|---|---|---|
| 49 | 11 | 150 | 201,13 | 200 | DC 193 | 1 | IIIT | 3 | – | – | 47,6 |
| 50 | 11 | 150 | 301,69 | 300 | DC 193 | 1 | IIIT | 3 | – | – | 61 |
| 51 | 12 | 150 | 222,86 | 200 | DC 193 | 1 | IIIT | 3 | – | – | 50,5 |
| 52 | 12 | 150 | 334,29 | 300 | DC 193 | 1 | IIIT | 3 | – | – | 65,4 |
| 53 | 13 | 150 | 211,92 | 200 | DC 193 | 1 | IIIT | 3 | – | – | 49,0 |
| 54 | 13 | 150 | 317,88 | 300 | DC 193 | 1 | IIIT | 3 | – | – | 49,0 |
| 55 | 14 | 150 | 364,7 | 300 | DC 193 | 1 | IIIT | 3 | – | – | 69,5 |
| 56 | 15 | 150 | 215,18 | 200 | DC 193 | 1 | IIIT | 3 | – | – | 49,5 |
| 57 | 15 | 150 | 322,77 | 300 | DC 193 | 1 | IIIT | 3 | – | – | 63,9 |
| 58 | 16 | 18 600 | 17 512 | 110 | DC 190 | 186 | DMEA/TMEDA (4:1) | 186 | – | – | 2 790 |
| 59 | 17 | 100 | 103,0 | 110 | DC 190 | 1 | " " | 1 | – | – | 27,44 |
| 60 | 18 | 100 | 104,19 | 110 | DC 190 | 1 | " " | 1 | – | – | 27,6 |
| 61 | 19 | 100 | 102,54 | 110 | DC 190 | 1 | " " | 1 | – | – | 27,4 |
| 62 | 20 | 100 | 103,58 | 110 | DC 190 | 1 | " " | 1 | – | – | 27,5 |
| 63 | 21 | 100 | 84,74 | 110 | DC 190 | 1 | " " | 1 | – | – | 25,0 |
| 64 | 22 | 100 | 85,86 | 110 | DC 190 | 1 | " " | 1 | – | – | 25,15 |

0 032 380

Tabelle 4
Fortsetzung — Herstellung der Schaumstoffe

| Bei-spiel | Kristallitsuspension Art nach Bei-spiel | Menge [g] | Roh-MDI Menge [g] | KZ | Schaumsta-bilisator Art | Menge [g] | Katalysator Art | Menge [g] | Vernetzer Art | Menge [g] | CCl$_3$F [g] |
|---|---|---|---|---|---|---|---|---|---|---|---|
| 65 | 23 | 150 | 236,25 | 200 | DC 193 | 1 | HHT | 3 | — | — | 52,2 |
| 66 | 24 | 100 | 97,62 | 110 | DC 190 | 1 | DMEA/ TREDA (4:1) | 1 | — | — | 26,5 |
| 67 | 25 | 100 | 96,13 | 110 | DC 190 | 1 | " " | 1 | — | — | 26,5 |
| 68 | 26 | 100 | 98,62 | 110 | DC 190 | 1 | " " | 1 | — | — | 26,9 |
| 69 | 27 | 100 | 96,07 | 110 | DC 190 | 1 | " " | 1 | — | — | 26,5 |
| 70 | 28 | 100 | 98,34 | 110 | DC 190 | 1 | " " | 1 | — | — | 26,8 |
| 71 | 29 | 100 | 97,13 | 110 | DC 190 | 1 | " " | 1 | — | — | 26,7 |
| 72 | 30 | 100 | 95,83 | 110 | DC 190 | 1 | " " | 1 | — | — | 26,5 |
| 73 | 31 | 100 | 95,93 | 110 | DC 190 | 1 | " " | 1 | — | — | 26,5 |
| 74 | 32 | 100 | 96,0 | 110 | DC 190 | 1 | " " | 1 | — | — | 26,5 |

## Tabelle 4
## Mechanische Eigenschaften

| Bei-spiel | Druckfestigkeit nach DIN 53 421 in Schaum-richtung [N/mm²] | quer zur Schaum-richtung [N/mm²] | Zelligkeit | Abriebfestig-keit nach Handversuch[*] | Raumge-gewicht [g/l] | Schrumpf | Start-zeit [sec] | Abbinde-zeit [sec] | Steig-zeit [sec] |
|---|---|---|---|---|---|---|---|---|---|
| 33 | 238 | 121 | feinzellig | sehr gut | 43 | minimal | 9 | 26 | 45 |
| 34 | 175 | 78 | " | " " | 37,6 | " | 9 | 22 | 37 |
| 35 | 208 | 89 (bei 10 % Stauchung) | " | " " | 37,1 | " | 9 | 19 | 34 |
| 36 | 289 | 117 | " | " " | 40,3 | " | 12 | 31 | 58 |
| 37 | 257 | 109 (bei 10 % Stauchung) | " | " " | 38,3 | " | 11 | 27 | 51 |
| 38 | 199 | 78 | " | " " | 33,5 | " | 8 | 23 | 40 |
| 39 | 207 | 94 | " | " " | 40,2 | " | 9 | 20 | 33 |
| 40 | 210 | 94 | " | " " | 39 | kein | 9 | 22 | 45 |
| 41 | 198 | 64 | " | " " | 32,2 | minimal | 8 | 30 | 43 |
| 42 | 216 | 95 | " | " " | 37,0 | " | 7 | 19 | 35 |
| 43 | 219 | 87 (bei 10 % Stauchung) | " | " " | 36,7 | " | 9 | 21 | 36 |
| 44 | 324 | 177 | " | " " | 38,9 | kein | 21 | 62 | 96 |
| 45 | 322 | 131 (bei 10 % Stauchung) | " | " " | 39,5 | minimal | 23 | 73 | 112 |

* Zur qualitativen Beurteilung der Abriebfestigkeit wurde der Schaumstoff senkrecht zur Steigrichtung aufgeschnitten und mit dem Daumen kräftig über die Schnittfläche gefahren. Klassifiziert wurde wie folgt :

sehr gut : kein Abrieb

gut : geringfügiger Abrieb

mittelmäßig : deutlicher Abrieb

schlecht : sehr großer Abrieb ; Schaumstoff leicht zwischen den Fingern pulverisierbar im Gegensatz zur Beurteilung sehr gut bis mittelmäßig

0 032 380

Tabelle 4
Fortsetzung — Mechanische Eigenschaften

| Bei-spiel | Druckfestigkeit nach DIN 53 421 in Schaum-richtung [N/mm²] | quer zur Schaum-richtung [N/mm²] | Zelligkeit | Abriebfertig-keit nach Handversuch | Raumge-gewicht [g/l] | Schrumpf | Start-zeit [sec] | Abbinde-zeit [sec] | Steig-zeit [sec] |
|---|---|---|---|---|---|---|---|---|---|
| 46 | 337 | 145 (bei 10 % Stauchung) | " | " " | 39,2 | kein | 25 | 63 | 123 |
| 47 | 228 | 94 | " | " " | 36,8 | minimal | 9 | 19 | 37 |
| 48 | 275 | 201 | " | " " | 40,8 | " | 11 | 28 | 40 |
| 49 | 248 | 85 | " | " " | 37,3 | " | 9 | 22 | 45 |
| 50 | 256 | 170 | " | " " | 39,8 | " | 11 | 33 | 54 |
| 51 | 250 | 116 | " | " " | 32,8 | " | 11 | 28 | 46 |
| 52 | 229 | 155 | " | " " | 36,6 | " | 16 | 38 | 57 |
| 53 | 222 | 78 | " | " " | 37,1 | leicht | 9 | 23 | 42 |
| 54 | 208 | 112 | " | " " | 40,9 | " | 11 | 27 | 47 |
| 55 | 298 | 130 (bei 10 % Stauchung) | " | " " | 37,9 | " | 14 | 63 | 116 |
| 56 | 265 | 137 | " | " " | 38,2 | " | 9 | 25 | 48 |
| 57 | 307 | 160 | " | " " | 43,8 | " | 13 | 35 | 56 |
| 58 | nicht gemessen | nicht gemessen | " | " " | 70,0 | kein | 51 | 204 | 285 |
| 59 | " " " | " " " | " | " " | nicht gemessen | " | 43 | 172 | 283 |
| 60 | " " " | " " " | " | " " " " " " | " | 42 | 160 | 234 |
| 61 | " " " | " " " | " | " " " " " " | " | 42 | 182 | 247 |
| 62 | " " " | " " " | " | " " " " " " | " | 46 | 154 | 258 |
| 63 | " " " | " " " | " | " " " " " " | " | 9 | 36 | 51 |
| 64 | " " " | " " " | " | " " " " " " | " | 16 | 48 | 72 |
| 65 | 161 | 90 | " | " " " " " " | " | 9 | 36 | 78 |

0 032 380

Tabelle 4
Fortsetzung — Mechanische Eigenschaften

| Bei-spiel | Zelligkeit | | Abriebfestigkeit nach Handversuch | | Schrumpf | Start-zeit [sec] | Abbinde-zeit [sec] | Steig-zeit [sec] |
|---|---|---|---|---|---|---|---|---|
| 66 | feinzellig | | sehr gut | | kein | 62 | 196 | 276 |
| 67 | " | " | " | " | " | 64 | 206 | 308 |
| 68 | " | " | " | " | " | 58 | 185 | 293 |
| 69 | " | " | " | " | " | 58 | 186 | 264 |
| 70 | " | " | " | " | " | 59 | 212 | 290 |
| 71 | " | " | " | " | " | 70 | 201 | 306 |
| 72 | " | " | " | " | " | 63 | 193 | 270 |
| 73 | " | " | " | " | " | 63 | 183 | 262 |
| 74 | " | " | " | " | " | 65 | 196 | 276 |

0 032 380

## 0 032 380

**Patentansprüche**

1. Verfahren zur Herstellung von urethan- und/oder isocyanuratgruppenhaltigen Hartschaumstoffen durch Umsetzung von organischen Polyisocyanaten mit Verbindungen mit reaktiven Wasserstoffatomen in Gegenwart von Treibmitteln, Katalysatoren und gegenbenenfalls Hilfs- und Zusatzstoffen, dadurch gekennzeichnet, daß man als Verbindungen mit reaktiven Wasserstoffatomen lagerstabile Kristallitsuspensionen verwendet, die enthalten als

a) kohärente Phase Polyole mit einer Funktionalität von 2 bis 8 und Hydroxylzahlen von 150 bis 800 und als

b) disperse Phase, kristalline, organische Komponenten mit mindestens einem Zerewitinoffaktiven Wasserstoffatom aus der Gruppe der

b1) mono- bis tetrafunktionellen Polyesterole mit Hydroxylzahlen von 10 bis 500 und Schmelzpunkten von 30 bis 240 °C, hergestellt aus aliphatischen und/oder aromatischen Dicarbonsäuren, deren Anhydriden oder Diester oder Mischungen aus den genannten Dicarbonsäuren oder -derivaten und mono- und polyfunktionellen Carbonsäuren in einer Menge bis zu 10 Mol-%, bezogen auf die verwendeten aromatischen und/oder aliphatischen Dicarbonsäuren oder -derivate und zweiwertigen symmetrischen Alkoholen oder Mischungen aus zweiwertigen symmetrischen Alkoholen und unsymmetrisch aufgebauten Diolen in einer Menge bis zu 15 Mol.-% oder Monoalkoholen in einer Menge bis zu 20 Mol.-%, wobei die Mol.-% bezogen sind auf die symmetrischen zweiwertigen Alkohole,

b2) Oligoamide mit Molekulargewichten von 142 bis 5 000 und Schmelzpunkten von 30 bis 260 °C, hergestellt durch Polykondensation von aliphatischen oder aromatischen Dicarbonsäuren oder den entsprechenden Dicarbonsäureestern und aliphatischen primären und/oder sekundären Diaminen sowie Alkanolaminen im Molverhältnis 1 : 1,05 bis 2,

b3) Oligo- oder Polyesteramine mit Molekulargewichten von 400 bis 5 000 und Schmelzpunkten von 30 bis 190 °C, hergestellt durch Polykondensation von aliphatischen, cycloaliphatischen und/oder aromatischen Diolen mit aromatischen Aminocarbonsäuren oder -estern oder Mischungen aus Aminocarbonsäuren und aromatischen Dicarbonsäuren oder deren Dialkylester mit monofunktionellen $C_1$- bis $C_4$-Alkoholen, die teilweise durch aliphatische Dicarbonsäure ersetzt sein können, so daß die erhaltenen Oligo- oder Polyesteramine, bezogen auf die Gesamtmenge an Carbonsäuren, 20 bis 80 Mol.-% aromatische Aminocarbonsäuren einkondensiert enthalten, in solchen molaren Mengen, daß das Verhältnis von Carboxyl- oder Estergruppen der Carbonsäuren zu Hydroxylgruppen der Diole 1 : 0,5 bis 1,9 beträgt oder durch Polykondensation von β-Hydroxyalkyl-arylaminen oder von Mischungen aus β-Hydroxyalkylarylaminen und den obengenannten Diolen mit Dicarbonsäuren oder deren Ester,

b4) Oligo- oder Polyurethane mit Molekulargewichten von 280 bis 5 000 und Schmelzpunkten von 30 bis 260 °C, hergestellt durch Polyaddition aus organischen Diisocyanaten und aliphatischen Diolen im Molverhältnis von 1 : 1,05 bis 2,

b5) amino- oder hydroxylgruppenhaltigen Polyäther mit Molekulargewichten von 600 bis 20 000 und Schmelzpunkten von 30 bis 180 °C, hergestellt aus Alkylenoxid, Cyclohexenoxid, Styroloxid oder Tetrahydrofuran,

b6) Polyacetale oder Polyacetalcopolymere mit Molekulargewichten von 600 bis 100 000 und Schmelzpunkten von 40 bis 180 °C, oder beliebige Gemische der genannten kristallinen Komponenten, der Anteil an disperser Phase (b) in der schaumfähigen Reaktionsmischung 0,5 bis 50 Gew.-%, bezogen auf das Gewicht der kohärenten Phase (a), beträgt und die organischen Polyisocyanate und Kristallitsuspensionen oder Mischungen aus Kristallitsuspensionen und zusätzlichen Polyester- und/oder Polyether-polyolen in solchen Mengen umsetzt, daß die Verhältnisse von reaktiven Wasserstoffatomen zu NCO-Gruppen 1 : 0,8 bis 2,5 bei urethangruppenhaltigen Schaumstoffen und 1 : 2 bis 60 bei gegebenenfalls urethangruppenhaltigen Polyisocyanuratschaumstoffen sind.

2. Verfahren nach Anspruch 1, dadurch gekennzeichnet, daß man als kohärente Phase (a) bei 10 bis 30 °C flüssige Polyole aus der Gruppe der Polyesterpolyole mit Funktionalitäten von 2 bis 6 und Hydroxylzahlen von 200 bis 700, Mischungen aus solchen Polyesterpolyolen mit löslichen kristallinen Komponenten, Polyätherpolyole mit Funktionalitäten von 2 bis 8 und Hydroxylzahlen von 150 bis 800 oder deren Gemische verwendet.

**Claims**

1. A process for the preparation of rigid foams containing urethane and/or isocyanurate groups by reacting organic polyisocyanates with compounds having reactive hydrogen atoms, in the presence of blowing agents, catalysts and optional auxiliaries and additives, wherein there are used as compounds having reactive hydrogen atoms storagestable crystalline suspensions containing

a) as coherent phase, polyols having a functionality of 2 to 8 and a hydroxyl number of 150 to 800, and

b) as disperse phase, crystalline organic components which have at least one hydrogen atom capable of undergoing a Zerewitinoff reaction, and are selected from the group consisting of

23

b1) monofunctional to tetrafunctional polyester polyols having a hydroxyl number of 10 to 500 and a melting point of 30 to 240 °C, and prepared from aliphatic and/or aromatic dicarboxylic acids, their anhydrides or diesters, or mixtures of the said dicarboxylic acids or derivatives and monofunctional and polyfunctional carboxylic acids in an amount of up to 10 mole%, based on the aromatic and/or aliphatic dicarboxylic acids or derivatives employed, and dihydric symmetrical alcohols or mixtures of dihydric symmetrical alcohols and asymmetrical diols in an amount of up to 15 mole% or monoalcohols in an amount of up to 20 mole%, the molar percentages being based on the symmetrical dihydric alcohols,

b2) oligoamides having a molecular weight of 142 to 5 000 and a melting point of 30 to 260 °C, and prepared by polycondensation of aliphatic or aromatic dicarboxylic acids or the corresponding dicarboxylic acid esters and aliphatic primary and/or secondary diamines as well as alkanolamines in a molar ratio of 1 : 1.05 to 2,

b3) oligoamines or polyester amines having a molecular weight of 400 to 5 000 and a melting point of 30 to 190 °C, and prepared by polycondensation of aliphatic, cycloaliphatic and/or aromatic diols with aromatic aminocarboxylic acids or esters or mixtures of aminocarboxylic acids and aromatic dicarboxylic acids or their dialkyl esters with monofunctional $C_1$-$C_4$-alcohols which may be partially replaced by aliphatic dicarboxylic acid, so that the resulting oligoamines or polyester amines contain from 20 to 80 mole%, based on the total amount of carboxylic acids, of condensed units or aromatic aminocarboxylic acids, in such molar amounts that the ratio of carboxyl or ester groups of the carboxylic acids to hydroxyl groups of the diols is 1 : 0.5 to 1.9, or by polycondensation of β-hydroxyalkylarylamines or mixtures of β-hydroxyalkylarylamines and the above-mentioned diols with dicarboxylic acids or their esters,

b4) oligourethanes or polyurethanes having a molecular weight of 280 to 5 000 and a melting point of 30 to 260 °C, and prepared by polyaddition of organic diisocyanates and aliphatic diols in a molar ratio of 1 : 1.05 to 2,

b5) amino- or hydroxyl-containing polyethers having a molecular weight of 600 to 20 000 and a melting point of 30 to 180 °C, and prepared from alkylene oxide, cyclohexene oxide, styrene oxide or tetrahydrofuran,

b6) polyacetals or polyacetal copolymers having a molecular weight of 600 to 100 000 and a melting point of 40 to 180 °C,

or any mixtures of the said crystalline components, the proportion of disperse phase (b) in the foamable reaction mixture is from 0.5 to 50 % by weight, based on the weight of the coherent phase (a), and the organic polyisocyanates and crystalline suspensions or mixtures of crystalline suspensions and additional polyester and/or polyether polyols are reacted in such amounts that the ratios of reactive hydrogen atoms to NCO groups are 1 : 0.8 to 2.5 in the case of foams containing urethane groups, and 1 : 2 to 60 in the case of polyisocyanurate foams which may or may not contain urethane groups.

2. A process as claimed in claim 1, wherein polyols which are liquid at 10 to 30 °C and are selected from the group consisting of polyester polyols having a functionality of 2 to 6 and a hydroxyl number of 200 to 700 ; mixtures of such polyester polyols with soluble crystalline components ; polyether polyols having a functionality of 2 to 8 and a hydroxyl number of 150 to 800 ; and mixtures thereof are used as coherent phase (a).

**Revendications**

1. Procédé de préparation de mousses rigides, contenant des groupes uréthane et(ou) isocyanurate, par réaction de polyisocyanates organiques avec des composés à atomes d'hydrogène actifs en présence d'agents porogènes, de catalyseurs et éventuellement d'additifs et d'adjuvants, caractérisé en ce que l'on emploie comme composés à atomes d'hydrogène actifs des suspensions de cristallites stables au stockage, qui comprennent :

a) comme phase cohérente des polyols d'une fonctionnalité de 2 à 8 et avec des indices d'hydroxyle de 150 à 800 et

b) comme phase dispersée des composés organiques cristallins, contenant au moins un atome d'hydrogène actif selon Zerevitinov, choisis parmi

b1) les polyesterols mono- à tétra-fonctionnels avec des indices d'hydroxyle de 10 à 500 et des points de fusion compris entre 30 et 240 °C, préparés à partir d'acides dicarboxyliques aliphatiques et(ou) aromatiques, d'anhydrides ou de diesters de ces acides ou de mélanges de ces acides dicarboxyliques ou de leurs dérivés et d'acides carboxyliques mono- ou poly-fonctionnels en une proportion pouvant aller jusqu'à 10 % molaires par rapport aux acides dicarboxyliques aromatiques et(ou) aliphatiques et aux dérivés de ceux-ci, et d'alcools symétriques bivalents ou de mélanges d'alcools symétriques bivalents et de diols asymétriques en une proportion pouvant aller jusqu'à 15 % molaires ou de monols en une proportion pouvant aller jusqu'à 20 % molaires, les % molaires se rapportant aux alcools bivalents symétriques ;

b2) les oligo-amides avec des poids moléculaires de 142 à 5 000 et des points de fusion compris entre 30 et 260 °C, préparés par une polycondensation d'acides dicarboxyliques aliphatiques ou aromatiques ou d'esters de ces acides dicarboxyliques et de diamines aliphatiques primaires et(ou) secondaires, ainsi que d'alcanol-amines, en un rapport molaire de 1 : 1,05 à 1 : 2 ;

b3) les oligo- et polyester-amines avec des poids moléculaires de 400 à 5 000 et des points de fusion compris entre 30 et 190 °C, préparées, soit par une polycondensation de diols aliphatiques, cycloaliphatiques et(ou) aromatiques et d'acides ou esters d'acides amino-carboxyliques ou de mélanges d'acides amino-carboxyliques et d'acides dicarboxyliques aromatiques ou d'esters de dialkyle de ceux-ci et d'alcools monofonctionnels en $C_1$ à $C_4$, qui peuvent être remplacés partiellement par un acide dicarboxylique aliphatique, les oligo- ou polyester-amines obtenues contenant, par rapport à la proportion totale des acides carboxyliques, entre 20 et 80 % molaires d'acides aminocarboxyliques aromatiques copolymérisés, les proportions molaires étant choisies de façon à réaliser un rapport entre les groupes carboxyle ou ester des acides carboxyliques et les groupes hydroxyle des diols compris entre 1 : 0,5 et 1 : 1,9, soit par une polycondensation de β-hydroxyalkyl-arylamines ou de mélanges de β-hydroxyalkyl-arylamines et de diols tels qu'énumérés ci-dessus et d'acides dicarboxyliques ou d'esters de ceux-ci ;

b4) les oligo- ou poly-uréthanes avec des poids moléculaires de 280 à 5 000 et des points de fusion compris entre 30 et 260 °C, préparés par une polycondensation de diisocyanates organiques et de diols aliphatiques dans un rapport molaire de 1 : 1,5 à 1 : 2 ;

b5) les polyéthers à groupes amino ou hydroxyle avec des poids moléculaires de 600 à 20 000 et des points de fusion de 30 à 180 °C, préparés à partir d'oxyde d'alkylène, d'oxyde de cyclohexène, d'oxyde de styrène ou de tétrahydrofurane ;

b6) les polyacétals et copolymères de polyacétals avec des poids moléculaires de 600 à 100 000 et des points de fusion compris entre 40 et 180 °C,
ou des mélanges quelconques des composés cristallins énumérés, la proportion de la phase dispersée (b) dans le mélange réactionnel à expanser étant de 0,5 à 50 % en poids par rapport au poids de la phase cohérente (a), et on fait réagir les polyisocyanates organiques et les suspensions de cristalites ou les mélanges de suspensions de cristalites et de polyester- et(ou) de polyéther-polyols additionnels en des proportions telles que le rapport entre les atomes d'hydrogène actifs et les groupes NCO est compris entre 1 : 0,8 et 1 : 2,5 dans le cas de mousses à groupes uréthane et entre 1 : 2 et 1 : 60 dans le cas de mousses de polyisocyanurate, contenant éventuellement des groupes uréthane.

2. Procédé suivant la revendication 1, caractérisé en ce que l'on emploie pour la phase cohérente (a) des polyols liquides entre 10 et 30 °C et choisis parmi les polyester-polyols d'une fonctionnalité de 2 à 6 et avec des indices d'hydroxyle de 200 à 700, les mélanges de tels polyester-polyols et de composés cristallins solubles, de polyéther-polyols d'une fonctionnalité de 2 à 8 et avec des indices d'hydroxyle de 150 à 800 et des mélanges de ces substances.